# EUROPEAN PATENT APPLICATION

(11) **EP 4 332 859 A1**
(43) Date of publication of application: **06.03.2024**
(21) Application number: 23193023.1
(22) Date of filing: 23.08.2023
(51) Int. Cl.: G06Q 10/0639, G09B 19/16, H04W 4/02, H04W 4/38, H04W 4/40

(54) **A METHOD FOR EVALUATING PERFORMANCE OF AN OPERATOR OF A SERVICE VEHICLE**

(30) Priority: 31.08.2022 US 202217900557
(71) Applicant: Carnegie Robotics, LLC, Pittsburgh, Pennsylvania 15201 (US)
(72) Inventor: Bares, John, Pittsburgh, PA 15201 (US); Mondi, Patrick, Pittsburgh, PA 15201 (US); Thybo, Claus, 8230 Åbyhøj (DK); Tancraitor, Troy Edward, Pittsburgh, PA 15201 (US); Agafonov, Leonid, Pittsburgh, PA 15201 (US)
(74) Representative: Inspicos P/S

(57) **Abstract**

A method for evaluating performance of an operator of a service vehicle (1), such as a cleaning vehicle, is disclosed. While the operator operates the service vehicle (1), sensor readings related to the operation of the service vehicle are collected, by means of one or more sensors (4, 7) of the service vehicle (1). The collected sensor readings are compared to a set of predefined corresponding sensor values reflecting operation of the service vehicle (1), and performance of the operator is evaluated based on the comparison.

## Description

### FIELD OF THE INVENTION

The present invention relates to a method for evaluating performance of an operator of a service vehicle, such as a cleaning vehicle, a forklift, a powered or motorized pallet jack, etc. The method according to the invention may, e.g., be applied for evaluating whether or not the operator performs as expected and/or with sufficient quality, and may further include providing feedback to the operator in order to improve the performance of the operator and/or as a part of training the operator.

### BACKGROUND OF THE INVENTION

When an operator manually operates a service vehicle, such as a cleaning vehicle, the quality of the performed service as well as the handling of the service vehicle may vary from one operator to another, and/or from one run to another by the same operator. For instance, the ability to drive the service vehicle in a stable and/or safe manner, and/or the ability to provide appropriate high quality service, e.g. with appropriate coverage, may vary.

There may therefore be a need to evaluate the performance of an operator during operation of a service vehicle.

### DESCRIPTION OF THE INVENTION

It is an object of embodiments of the invention to provide a method for evaluating performance of an operator of a service vehicle in an easy and automatic manner.

It is a further object of embodiments of the invention to provide a method for evaluating performance of an operator of a service vehicle which allows training of the operator with minimum involvement of an instructor.

The invention provides a method for evaluating performance of an operator of a service vehicle, the service vehicle comprising one or more sensors, the method comprising the steps of:
- the operator operating the service vehicle,
- while the operator operates the service vehicle, collecting sensor readings related to the operation of the service vehicle, by means of the one or more sensors,
- comparing the collected sensor readings to a set of predefined corresponding sensor values reflecting operation of the service vehicle, and
- evaluating performance of the operator based on the comparison.

Thus, the invention provides a method for evaluating performance of an operator of a service vehicle. In the present context the term 'service vehicle' should be interpreted to mean a device which is able to move while performing one or more specified service actions. For instance, the service vehicle may be a cleaning vehicle, in which case the performed service actions are cleaning actions, such as sweeping and/or washing floors, performing disinfection, etc. As an alternative, the service vehicle may be a forklift or a powered or motorized pallet jack, in which case the performed service actions may include moving items between specified positions, picking or placing item in storage racks, etc.

In the present context the term 'operator' should be interpreted to mean a person who is operating the service vehicle. This may include steering and/or navigating the service vehicle through a space where the one or more service actions are to be performed as well as causing the service vehicle to perform specified service actions at specified positions.

The service vehicle comprises one or more sensors. The sensors are applied for detecting various conditions or parameters which are relevant with respect to the operation of the service vehicle, and which may therefore be relevant with regard to evaluating performance of the operator of the service vehicle. This will be described in further detail below.

In the method according to the invention, the operator initially operates the service vehicle. This may, e.g., be done in a conventional manner, in which the operator steers or navigates the service vehicle across a specified area, while causing the service vehicle to perform specified service actions at specified positions within the area, e.g. in the form of performing relevant cleaning actions, moving items between specified positions, picking up or positioning items at specified positions, etc.

During the operation of the service vehicle as described above, sensor readings related to the operation of the service vehicle are collected by means of the one or more sensors. For instance, sensor readings may be collected which reflect a path being traversed by the service vehicle, velocity of the service vehicle along various parts of the path, acceleration pattern of the service vehicle, proximity to walls and/or objects within the traversed area, collisions of the service vehicle, focus attention of the operator, etc.

The collected sensor readings are then compared to a set of predefined corresponding sensor values reflecting operation of the service vehicle. This may include a direct comparison between collected sensor readings and values which reflect optimum or appropriate operation of the service vehicle. Alternatively or additionally, a behaviour of the service vehicle may be derived from the collected sensor readings, and this derived behaviour may be compared to an expected or appropriate behaviour. For instance, a path traversed by the service vehicle may be derived from sensor readings related to the position of the vehicle, and the traversed path may be compared to an optimal path and/or a path which provides appropriate coverage of the area being traversed. This could, e.g., include comparing relevant quantities related to the performance of the operator to derived statistics, e.g. in terms of a percentage of the floor area being covered by cleaning actions, average transport times for items being moved between specified positions, etc. Alternatively or additionally, the sensor data may be used for deriving a map, which could, e.g., be applied for evaluating path coverage.

In any event, the comparison provides information regarding whether or not and to what extent the operator operates the service vehicle in an appropriate and/or optimal manner.

Finally, performance of the operator is evaluated based on the comparison. Thereby the performance of the operator is evaluated in an easy and automatic manner, based on the sensor readings collected during operation of the service vehicle and knowledge regarding an expected and/or optimal behaviour of the service vehicle during performance of certain service actions. For instance, if the operator operates the service vehicle in a manner which is close to an optimal or expected behaviour, then the operator may receive a high performance score. On the other hand, if the service vehicle is operated in a manner which differs significantly from the optimal or expected behaviour, then the operator may receive a low performance score. The performance score may, e.g., form part of a certification scheme during training of the operator.

At least part of the collected sensor readings may relate to positioning of the service vehicle. This could, e.g., include tracking a path traversed by the service vehicle, detecting proximity to walls and/or objects within the area being traversed, etc. Alternatively or additionally, this may include detecting overlap and/or gaps between traversed portions of the area and/or detecting which service actions were performed at which positions along the traversed path. This may allow a coverage of the performed service actions to be derived.

According to this embodiment, the step of comparing may comprise comparing the collected sensor readings regarding the positioning of the service vehicle to an optimal path through the area, to full coverage of the area, and/or to any other suitable expected behaviour related to the positioning of the service vehicle. In the case that the collected sensor readings indicate that an optimal path is followed and/or that appropriate coverage is obtained, then the operator may receive a high performance score. On the other hand, if there is a significant discrepancy between the followed path and the optimal path and/or if a poor coverage is obtained, then the operator may receive a low performance score.

Alternatively or additionally, at least part of the collected sensor readings may relate to movement of the service vehicle. For instance, the collected sensor readings may relate to velocity and/or acceleration of the service vehicle. Alternatively or additionally, this may include sensor readings related to stability of the movement of the service vehicle, e.g. whether the service vehicle moves along a smooth path or in a wobbling or staggering manner. For instance, in the case that the service vehicle is a pallet jack, acceptable motions, speeds, accelerations, etc., may depend on the size, weight, and centre of mass of items carried by the pallet jack.

According to this embodiment, the collected sensor readings may be applied for deriving information regarding a velocity profile and/or an acceleration profile of the service vehicle along the traversed path, stability of the movement of the service vehicle, etc. Accordingly, the step of comparing may comprise comparing the detected movements of the service vehicle to an optimal velocity profile and/or acceleration profile, and/or to a smooth and stable movement of the service vehicle. For instance, an optimal velocity profile may specify a high velocity along straight parts of the path and a lower velocity at parts of the path where the service vehicle needs to turn and/or parts of the path where the service vehicle is close to a wall or an object. Similarly, an optimal acceleration profile may specify that acceleration or deceleration is only performed when a part of the path is entered in which a different velocity is required, e.g. when a wall is approached or the service vehicle enters or exits a turn.

Alternatively or additionally, at least part of the collected sensor readings may relate to focus attention of the operator. In the present context the term 'focus attention of the operator' should be interpreted to mean information related to how concentrated or focused the operator is, including whether or not the operator may be regarded as paying sufficient attention to the operation of the service vehicle.

Relevant sensor readings related to focus attention of the operator may include facial images, based on which it may, e.g., be determined whether or not the operator appears to be sleepy and/or whether or not the operator appears to be paying attention to other activities than the driving and operation of the service vehicle, such as performing conversations via a cell phone or face to face, reading, watching videos, etc. Other relevant sensor readings include reaction time to feedback from the vehicle or environment, gaze direction, voice detection, speech recognition, etc.

According to this embodiment, the step of comparing may comprise comparing the collected sensor readings to expected behaviour of a focused and attentive operator. In the case that the comparison reveals that the operator appears to be focused and attentive, the operator may receive a high performance score. If, on the other hand, it appears that the operator is not sufficiently focused and attentive, the operator may receive a low performance score.

The set of predefined corresponding sensor values may comprise sensor values which were collected by means of the one or more sensors of the service vehicle, or of a similar service vehicle, during previous operation of the service vehicle or the similar service vehicle by the same operator.

According to this embodiment, the performance of the operator is compared to previous performance of the operator. For instance, the predefined corresponding sensor values may represent a baseline or a mean measure for the performance of the operator. In this case the comparison may reveal whether or not the operator performs at a usual or expected level. Alternatively or additionally, this may be applied for tracking a progress of the operator, e.g. as part of a training program. For instance, a certain progress in performance may be applied as an acceptance threshold for advancing to the next level in the training of the operator.

The set of predefined corresponding sensor values may comprise sensor values which were collected by means of the one or more sensors of the service vehicle, or of a similar service vehicle, during previous operation of the service vehicle or the similar service vehicle by another operator.

According to this embodiment, the performance of the operator may be compared to the performance of one or more other operators. This may, e.g., allow ranking of the operators according to their performance level. This may, e.g., be used as a basis for identifying operators who perform exceptionally well, in order to reward these operators appropriately. Furthermore, this may be used as a basis for identifying operators who require further training in order to lift their performance level, and it may even be possible to identify which skills of the operators that are in particular need for being trained. Finally, this may be used for identifying behaviour of operators which results in particularly good performance, and use this for training other operators to copy such behaviour, thereby improving their performance.

As an alternative, the set of predefined corresponding sensor values may be at least partly obtained without performing actual sensor readings by means of the service vehicle or a similar service vehicle. For instance, the predefined sensor values may be predicted, e.g. using simulation, selected engineering judgment, and/or derived from business needs.

The step of evaluating performance of the operator may comprise generating an instruction message for the operator in order to cause the operator to improve his or her performance. This could, e.g., include an interactive score which the operator may seek to improve during operation, similar to a game.

According to this embodiment, the method may form part of a training program for the operator. Thereby the training program may be executed with no or only limited involvement of a human instructor. This may, e.g., allow many new operators to be trained by means of only a few experienced operators, and thereby in a cost effective manner, in a monetary sense as well as in the sense of use of the resources of the experienced operators.

For instance, the steps of comparing and evaluating performance may be performed substantially continuously while the operator operates the service vehicle. In this case, the behaviour of the operator may be adjusted or corrected 'on the fly', thereby providing efficient and immediate training of the operator. As an alternative, instruction messages may be generated and communicated to the operator after a run has been completed and/or as a part of periodical status feedback for the operator.

The generated instruction message may, e.g., be visually shown to the operator, e.g. on a display mounted on or forming part of the service vehicle. Alternatively or additionally, an audible instruction message may be generated and/or the service vehicle may demonstrate to the operator how to perform a particular action or navigation, such as turning in a tight spot, in an optimal manner, e.g. if this action or navigation appears to be difficult for the operator.

The instruction message may, e.g., instruct the operator to slow down and/or speed up at certain parts of the path, to position the service vehicle in a different manner in order to decrease overlaps and/or gaps between swept areas, and/or any other suitable kind of instructions which may improve the performance of the operator.

The step of evaluating performance of the operator may form part of a training plan for the operator. As described above, this may involve generating instruction messages for the operator with the purpose of causing the operator to adjust his or her behaviour to thereby improve the performance of the operator. Alternatively or additionally, the method may be applied in order to follow up regarding whether or not the operator follows a scheduled training plan and/or whether or not the performance of the operator develops as expected.

The step of evaluating performance of the operator may comprise forwarding a result of the evaluation to a central data collection system and/or to a manager.

According to this embodiment, the result of the evaluation may be subjected to statistical analysis, e.g. based on data originating from a vast number of runs, service vehicles and/or operators. Alternatively or additionally, a manager may use the received results as a tool for identifying operators who perform well, and who might therefore be eligible for appropriate remuneration, operators who need further training, operators who continue to perform poorly, and who might therefore need to be reprimanded, operators who might be suitable for being appointed as mentors or instructors for new operators, etc. Alternatively or additionally, the received results may be used as part of documentation that a contractor is performing a task in accordance with an agreement. For instance, a contract cleaner may document to a customer that the cleaning was done well, e.g. in terms of coverage, i.e. cleaning the entire area, efficiency of the cleaning and/or minimum interruption of the site.

The service vehicle may be an autonomously operable service vehicle, and the method may further comprise the step of applying a result of the evaluation as an input to a control system configured to control autonomous operation of the service vehicle.

According to this embodiment, the behaviour of and/or actions performed by an operator who may be considered as highly skilled and well performing, may subsequently be copied or mimicked by the service vehicle in the autonomous mode, and thereby the autonomously operated service vehicle will be able to perform substantially as well as the highly skilled operator. Thus, the skilled operator only needs to operate the service vehicle within a certain area a limited number of times in order to ensure that the service vehicle continues to operate at a high performance level within that area, in the autonomous mode, and the skilled operator may move on to another area and another service vehicle. Accordingly, the skills of the skilled operator can be used in a very efficient and cost effective manner.

The service vehicle may be a cleaning vehicle, such as a vehicle for sweeping and/or washing floors. As an alternative, the service vehicle may be a fork lift, a powered or motorized pallet jack, or any other suitable kind of service vehicle.

### BRIEF DESCRIPTION OF THE DRAWINGS

The invention will now be described in further detail with reference to the accompanying drawings in which
Figs. 1 and 2 illustrate a service vehicle for use in a method according to an embodiment of the invention,
Figs. 3 and 4 are graphs illustrating various sensor readings related to operation of a service vehicle for use in a method according to embodiments of the invention,
Fig. 5 is a graph illustrating optimal velocity of a service vehicle as a function of turning angle, and
Fig. 6 shows detected coverage of an area swept by a service vehicle for use in a method according to an embodiment of the invention.

### DETAILED DESCRIPTION OF THE DRAWINGS

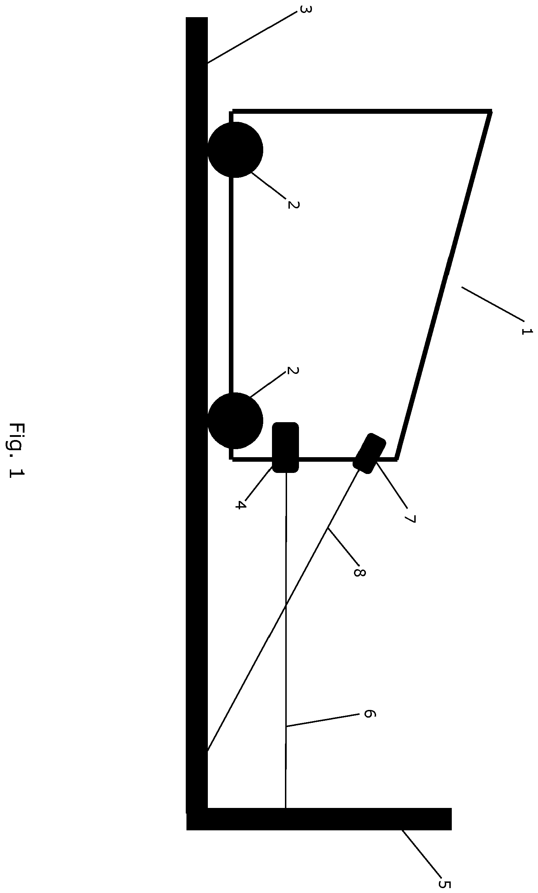

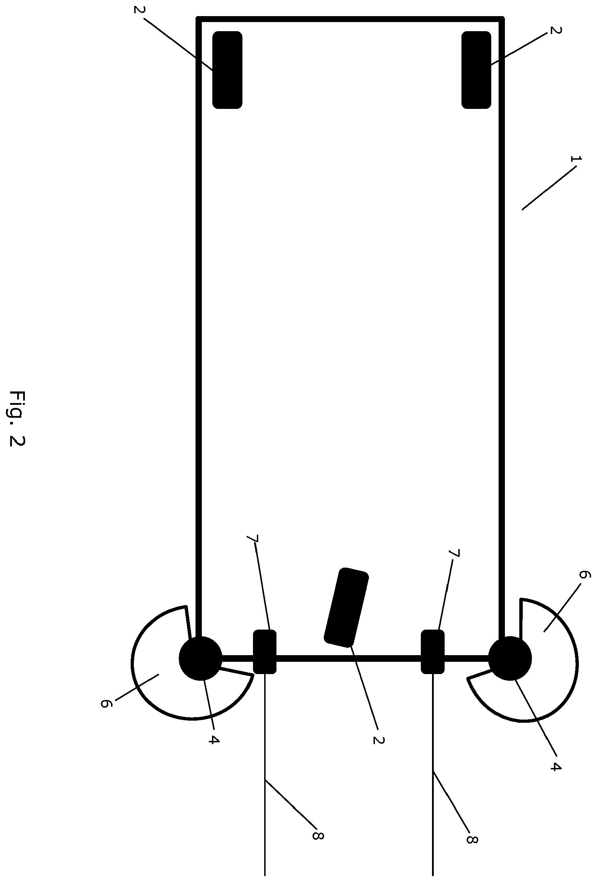

Figs. 1 and 2 are schematic views of a service vehicle 1 for use in a method according to an embodiment of the invention. Fig. 1 is a side view of the service vehicle 1 and Fig. 1 is a top view of the service vehicle 1. The service vehicle 1 may, e.g., be a cleaning vehicle for performing cleaning actions within a specified area, e.g. for sweeping and/or washing a floor within the specified area.

The service vehicle 1 comprises wheels 2, and it is therefore adapted for driving along a surface 3, e.g. in the form of a floor. The service vehicle 1 is further provided with a number of sensors for collecting sensor readings being relevant with respect to the operation of the service vehicle 1. For instance, the service vehicle 1 comprises two lidars 4 for detecting a position of the service vehicle 1 within the specified area, in particular relative to walls 5 and/or objects within the area. The lidars 4 detect the presence and proximity of obstacles in front of the service vehicle 1 and sideways relative to the service vehicle 1, as indicated by detection directions 6.

Furthermore, the service vehicle 1 comprises two drop-off sensors 7 for detecting obstacles in the form of slopes or vertical pits. The drop-off sensors 7 are arranged to detect such obstacles in front of and below the service vehicle 1, as indicated by detection directions 8.

Furthermore, the service vehicle 1 may comprise one or more further sensors which are not shown in Figs. 1 and 2. For instance, the service vehicle 1 may comprise one or more odometry sensors for detecting the movements of the wheels 2, thereby tracking movements of the service vehicle 1. Alternatively or additionally, the service vehicle 1 may comprise one or more inertial measurement units (IMU) for detecting 3D accelerations of the service vehicle 1, thereby providing information regarding the movements of the service vehicle 1. Alternatively or additionally, the service vehicle 1 may comprise a GPS unit for detecting the global position of the service vehicle 1.

The service vehicle 1 may be operated in the following manner. While the service vehicle 1 is operated by an operator in order to perform required actions, such as cleaning the floor 3, sensor readings are collected by means of the sensors 4, 7. Thereby information regarding how the operator operates the service vehicle 1 is obtained, e.g. including how the service vehicle 1 is positioned relative to obstacles, the wall 5, etc., which path is followed by the service vehicle 1, velocity and/or acceleration of the service vehicle 1 at various parts of the followed path, etc.

The collected sensor readings are then compared to a set of predefined corresponding sensor values, e.g. in the form of an optimal path, an optimal velocity pattern along the followed path, an optimal acceleration pattern along the followed path, etc. Based on this comparison, the performance of the operator is evaluated. For instance, if the sensor readings reveal that the operation of the service vehicle 1 is close to an optimal operation, e.g. in terms of path followed, velocity pattern and/or acceleration pattern, then the operator may receive a high performance score. On the other hand, if there is a significant discrepancy between the operation of the service vehicle 1 and the optimal operation, then the operator may receive a low performance score.

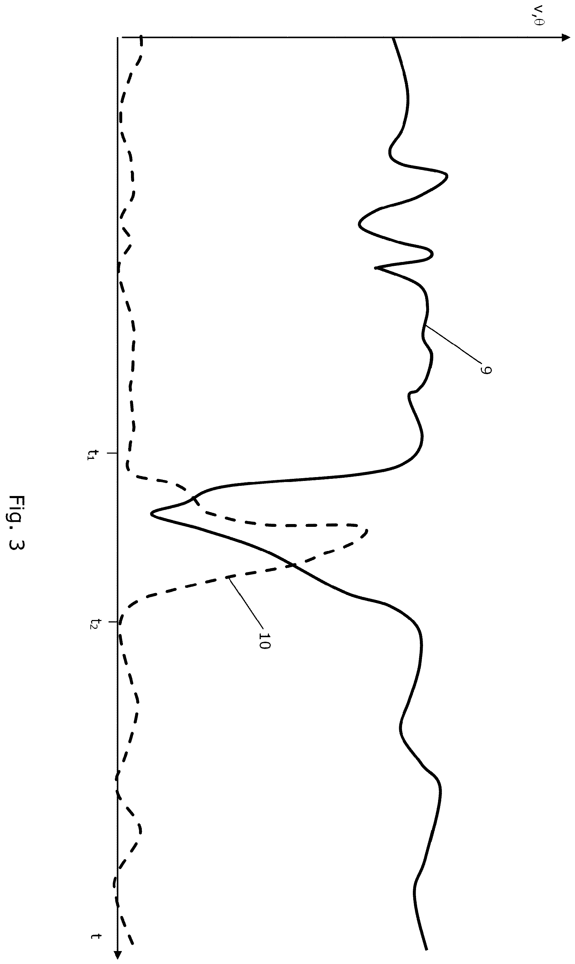

Fig. 3 is a graph illustrating sensor readings originating from a service vehicle, such as the service vehicle of Figs. 1 and 2, as a function of time. The solid line 9 represents velocity, v, of the service vehicle, and the dashed line 10 represents attitude of the service vehicle, in the form of a turning angle, θ, of the service vehicle. Thus, a turning angle, θ, of zero indicates that the service vehicle is following a straight path, i.e. that it is not turning, and a high turning angle, θ, indicates that the service vehicle is turning sharply, i.e. with a small radius of curvature.

It can be seen that within the time interval from t=t₁ to t=t₂, the turning angle 10 increases and then decreases relatively abruptly. This indicates that the service vehicle has entered and exited a curve along the followed path, i.e. that the service vehicle has performed a turn. It can also be seen that the velocity of the service vehicle is decreased immediately before the service vehicle starts turning, i.e. immediately before the curve is entered, and that it is increased while the service vehicle is exiting the curve. Such a behaviour would ensure that the curve is passed safely and in a manner which allows good coverage through the curve. Accordingly, the sensor readings illustrated in Fig. 3 represent an appropriate and expected behaviour, which may result in a high performance score for the operator.

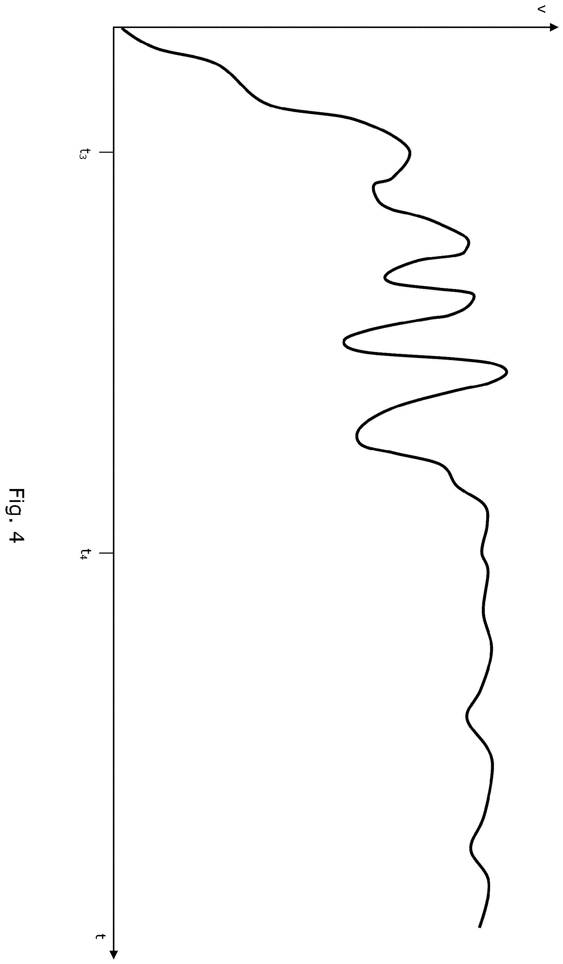

Fig. 4 is a graph illustrating sensor readings in the form of velocity, v, of a service vehicle as a function of time. It can be seen that within the time interval from t=t₃ to t=t₄, the velocity of the service vehicle fluctuates significantly, corresponding to unstable or staggering movement of the service vehicle. However, after t=t₄, the velocity of the service vehicle is substantially constant, corresponding to stable and smooth movement of the service vehicle.

Thus, the operator may receive a low performance score for the time interval between t=t₃ and t=t₄, and a high performance score for the time interval after t=t₄.

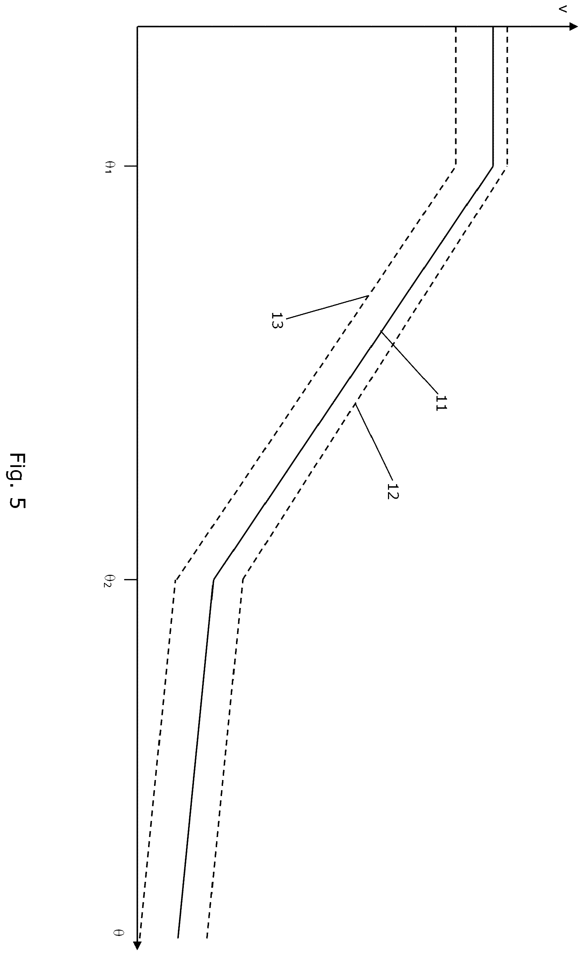

Fig. 5 is a graph illustrating optimal velocity, v, of a service vehicle as a function of turning angle, θ, of the service vehicle. The solid line 11 represents the optimal velocity, dashed line 12 represents an upper boundary of an acceptable velocity range, and dashed line 13 represents a lower boundary of the acceptable velocity range.

It can be seen that at low tuning angles, below θ=θ₁, where the service vehicle is not turning or only turning slightly, a high velocity is appropriate, e.g. the highest possible or the highest allowed velocity, e.g. for safety purposes. When a turning angle of θ=θ₁ is reached, it is concluded that the service vehicle is turning, and it is no longer considered safe or appropriate to operate the service vehicle at the maximum velocity. Therefore, the optimal velocity 11 is decreased, and continues to decrease at a significant rate as the turning angle increases. Thus, the sharper the service vehicle is turning, the lower the optimal or recommended velocity 11.

When a turning angle of θ=θ₂ is reached, the optimal velocity 11 is so low that a further increase in turning angle is less critical. Therefore, at this point the rate of decrease of the optimal velocity is decreased.

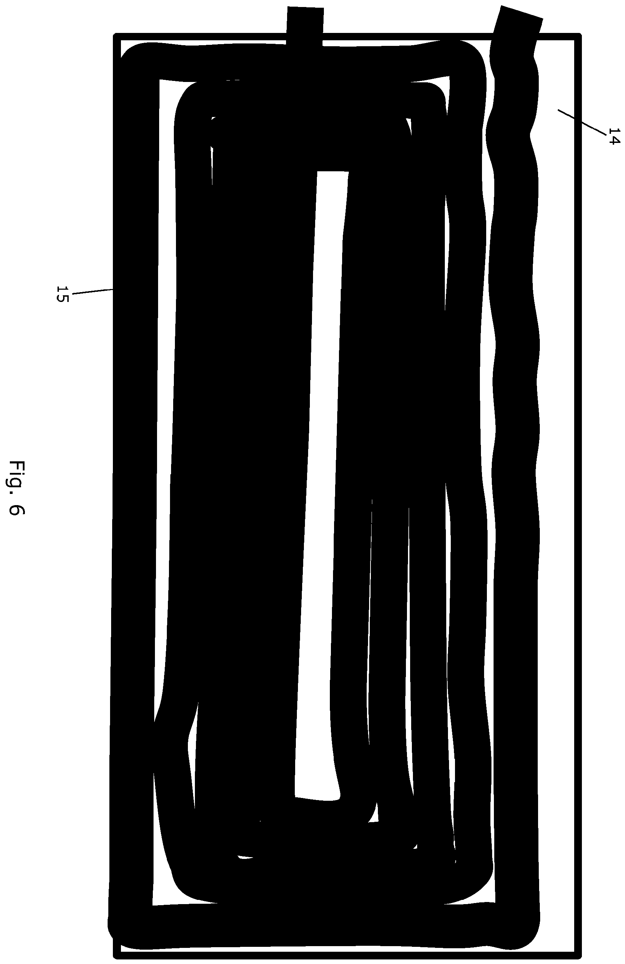

Fig. 6 shows an area 14 which has been swept by means of a service vehicle. The path 15 followed is illustrated, as well as the coverage for the respective parts of the followed path 15, in the form of the width of the shown path 15. It can be seen that the followed path 15 has left significant uncovered parts of the swept area 14, indicating a poor coverage of the swept area 14. It can also be seen that parts of the followed path 15 are wobbling, indicating unstable movement of the service vehicle in these parts.

Thus, the path 15 illustrated in Fig. 6 represents low performance of the operator.

## Claims

1. A method for evaluating performance of an operator of a service vehicle (1), the service vehicle (1) comprising one or more sensors (4, 7), the method comprising the steps of:
- the operator operating the service vehicle (1),
- while the operator operates the service vehicle (1), collecting sensor readings related to the operation of the service vehicle (1), by means of the one or more sensors (4, 7),
- comparing the collected sensor readings to a set of predefined corresponding sensor values reflecting operation of the service vehicle (1), and
- evaluating performance of the operator based on the comparison.

2. A method according to claim 1, wherein at least part of the collected sensor readings relates to positioning of the service vehicle (1).

3. A method according to claim 1 or 2, wherein at least part of the collected sensor readings relates to movement of the service vehicle (1).

4. A method according to claim 3, wherein at least part of the collected sensor readings relates to speed and/or acceleration of the service vehicle (1).

5. A method according to any of the preceding claims, wherein at least part of the collected sensor readings relates to focus attention of the operator.

6. A method according to any of the preceding claims, wherein the set of predefined corresponding sensor values comprises sensor values which were collected by means of the one or more sensors (4, 7) of the service vehicle (1), or of a similar service vehicle (1), during previous operation of the service vehicle (1) or the similar service vehicle (1) by the same operator.

7. A method according to any of the preceding claims, wherein the set of predefined corresponding sensor values comprises sensor values which were collected by means of the one or more sensors (4, 7) of the service vehicle (1), or of a similar service vehicle (1), during previous operation of the service vehicle (1) or the similar service vehicle (1) by another operator.

8. A method according to any of the preceding claims, wherein the step of evaluating performance of the operator comprises generating an instruction message for the operator in order to cause the operator to improve his or her performance.

9. A method according to any of the preceding claims, wherein the step of evaluating performance of the operator forms part of a training plan for the operator.

10. A method according to any of the preceding claims, wherein the step of evaluating performance of the operator comprises forwarding a result of the evaluation to a central data collection system and/or to a manager.

11. A method according to any of the preceding claims, wherein the service vehicle (1) is an autonomously operable service vehicle, and wherein the method further comprises the step of applying a result of the evaluation as an input to a control system configured to control autonomous operation of the service vehicle (1).

12. A method according to any of the preceding claims, wherein the service vehicle (1) is a cleaning vehicle.
